# EUROPEAN PATENT APPLICATION

(11) **EP 2 554 759 A2**
(43) Date of publication of application: **06.02.2013**
(21) Application number: 12178719.6
(22) Date of filing: 31.07.2012
(51) Int. Cl.: E04B 1/80, E04C 2/296, F25D 23/06

(54) **High-performance vacuum insulation panel and manufacturing method thereof**

(30) Priority: 02.08.2011 KR 20110077045
(71) Applicant: Samsung Electronics Co., Ltd., Suwon-si, Gyeonggi-do, 443-742 (KR)
(72) Inventor: Jung, Young Sung, Gyeonggi-do (KR); Kim, Hyung Sung, Gyeonggi-do (KR); Park, Jong Sung, Seoul (KR); Kwon, Jae Sung, Gyeonggi-do (KR); Yoon, Kyoung Mi, Gyeonggi-do (KR)
(74) Representative: Bruce, Alexander Richard Henry

(57) **Abstract**

A vacuum insulation panel (1) improves heat transfer performance while improving durability of a core material (10) and a manufacturing method thereof. The vacuum insulation panel includes a gas-interception sheathing (12) material to cover a core material (10). The interior of the sheathing material is decompressed so that the sheathing material is hermetically sealed. The core material is formed of a lump of fiber, and the fiber has a hollow part formed therein.

## Description

Embodiments of the present invention relate to a vacuum insulation panel applicable, for example, to a refrigerator or a building and a manufacturing method thereof.

Generally, a vacuum insulation panel includes an inner porous core material maintaining the shape of the insulation panel, an outer gas-interception protective film (a sheathing material) to surround the inner core material to maintain vacuum, and a gas adsorbent or getter to maintain vacuum for a long period of time. The interior of the pouch (sheathing material) with the above-stated construction is decompressed into a vacuum state, thereby achieving high insulation.

The inner core material is formed of glass fiber or silica core. Initial performance of the glass fiber exhibits is excellent; however, porosity between pieces of fiber is large. As a result, high vacuum processing may be required as compared with a fumed silica core material of a nanostructure. In addition, durability of the inner core material is low.

Therefore, it is an aspect of the present invention to provide a vacuum insulation panel that improves heat transfer performance while improving durability of a core material, e.g.. glass fiber, and a manufacturing method thereof.

It is another aspect of the present invention to provide a vacuum insulation panel, a core material of which is decompressed under lower vacuum than a case in which the core material is formed of conventional glass fiber when a vacuum insulation panel having the same thermal conductivity is manufactured, thereby reducing manufacturing time and thus improving productivity, and a manufacturing method thereof.

Additional aspects of the invention will be set forth in part in the description which follows and, in part, will be obvious from the description, or may be learned by practice of the invention.

In accordance with one aspect of the present invention, a vacuum insulation panel includes a gas-interception sheathing material to cover a core material, an interior of the sheathing material being decompressed so that the sheathing material is hermetically sealed, wherein the core material is formed of a lump of fiber, and the fiber has a hollow part formed therein.

Optionally, the core material may be formed of glass fiber and/or glass wool.

Optionally, the hollow part may extend in a longitudinal direction of the fiber.

Optionally, the glass fiber may have an outer diameter of 1 to 10 µm, and the hollow part may have an inner diameter of several nm (3nm)to 5 µm.

Optionally, the core material may be provided at a surface thereof with a plurality of pores.

Optionally, the pores may have different sizes.

Optionally, the pores may be connected to the hollow part.

In accordance with another aspect of the present invention, a manufacturing method of a vacuum insulation panel includes preparing a gas-interception sheathing material formed in a pouch shape, forming a hollow part in glass fiber, pressing a lump of glass fiber while heating the lump of glass fiber at a predetermined temperature to form a core material, inserting the core material into the sheathing material, decompressing an interior of the sheathing material, and sealing the sheathing material.

Optionally, the glass fiber may be pressed at a temperature at which a sectional shape of the glass fiber is not changed.

Optionally, a plurality of pieces of glass fiber may be coupled to one another without an additional bonding agent.

Optionally, the core material may be manufactured using at least one selected from among a hot pressing method, needling method, and wet method using water and binder in a mixed state.

Optionally, the hollow part may extend in a longitudinal direction of the glass fiber.

Optionally, the glass fiber may be provided at an outer circumference thereof with a plurality of pores having different sizes.

Optionally, the pores may communicate with the hollow part.

In accordance with a further aspect of the present invention, a refrigerator includes a body defined by top and bottom walls, side walls, and a rear wall so that the body is formed in a box shape, a storage compartment provided in the body, and an insulation unit provided between the rear wall and the storage compartment for insulation, wherein the insulation unit includes a vacuum insulation panel, and the vacuum insulation panel includes a core material formed of a lump of glass fiber having a hollow part formed therein and a sheathing material to cover the core material, the sheathing material being hermetically sealed by decompressing an interior of the sheathing material.

Optionally, the glass fiber may be provided at an outer circumference thereof with a plurality of pores having different sizes.

These and/or other aspects of the invention will become apparent and more readily appreciated from the following description of the embodiments, taken in conjunction with the accompanying drawings of which:
FIG. 1 is a sectional view showing a vacuum insulation panel according to an embodiment of the present invention;
FIGS. 2 and 3 are perspective views showing a core material (glass wool) according to an embodiment of the present invention;
FIG. 4 is a perspective view showing a core material (glass fiber) according to an embodiment of the present invention;
FIGS. 5A to 6 are views schematically showing a process of manufacturing a vacuum insulation panel according to an embodiment of the present invention;
FIG. 7 is a perspective view showing a core material (glass wool) according to another embodiment of the present invention;
FIG. 8 is a perspective view showing a core material (glass fiber) according to another embodiment of the present invention; and
FIG. 9 is a view schematically showing a refrigerator having the vacuum insulation panel according to the embodiment of the present invention mounted therein.

Reference will now be made in detail to the embodiments of the present invention, examples of which are illustrated in the accompanying drawings, wherein like reference numerals refer to like elements throughout.

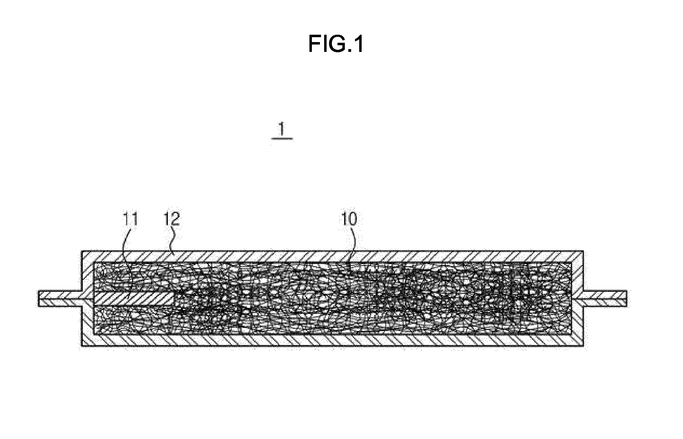

FIG. 1 is a sectional view showing a vacuum insulation panel according to an embodiment of the present invention,

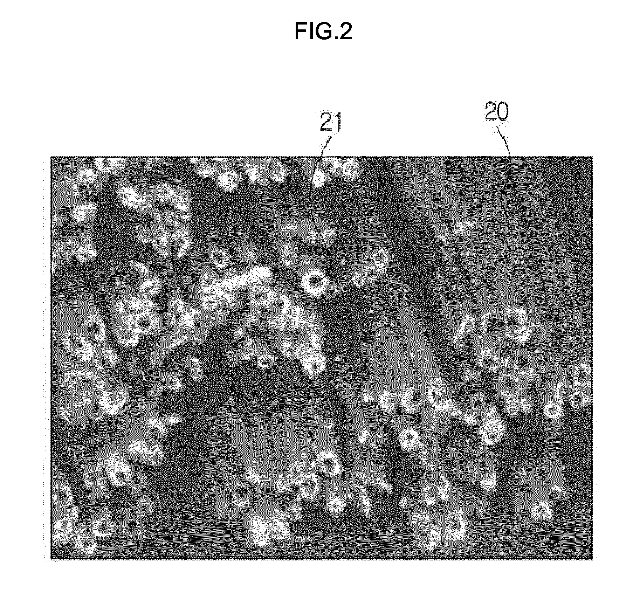

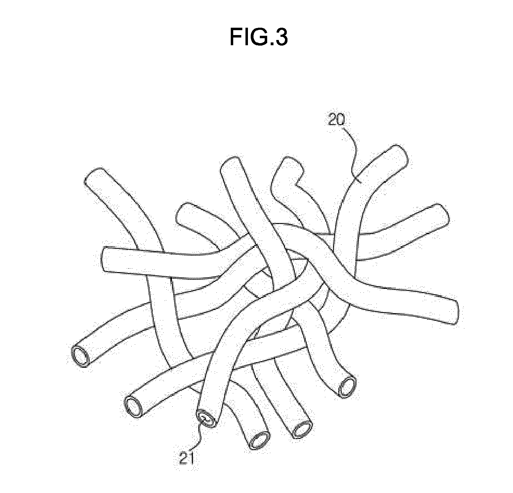

FIGS. 2 and 3 are perspective views showing a core material (glass wool) according to an embodiment of the present invention,

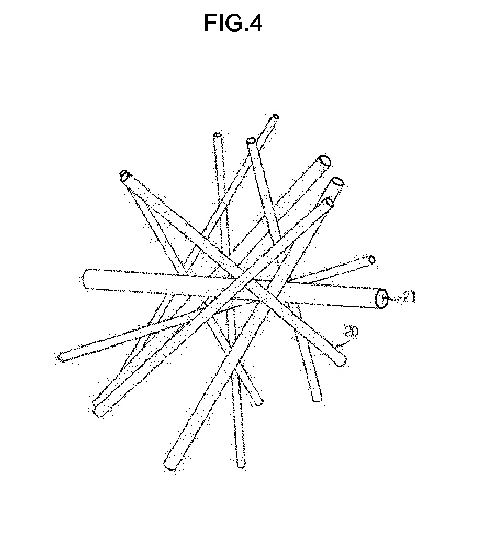

FIG. 4 is a perspective view showing a core material (glass fiber) according to an embodiment of the present invention,

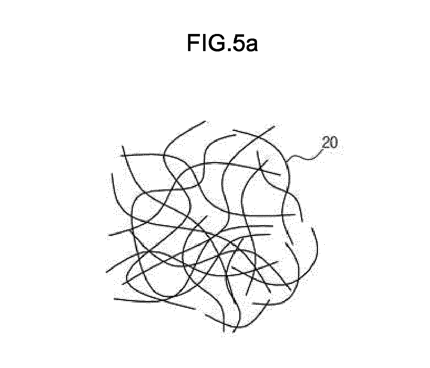

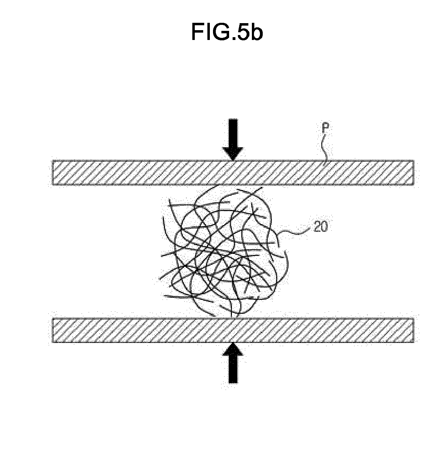

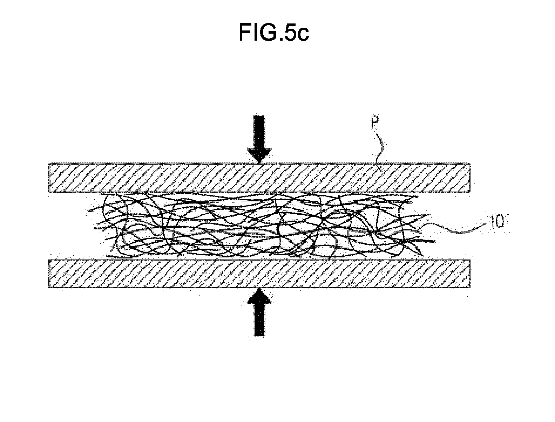

FIGS. 5A to 6 are views schematically showing a process of manufacturing a vacuum insulation panel according to an embodiment of the present invention,

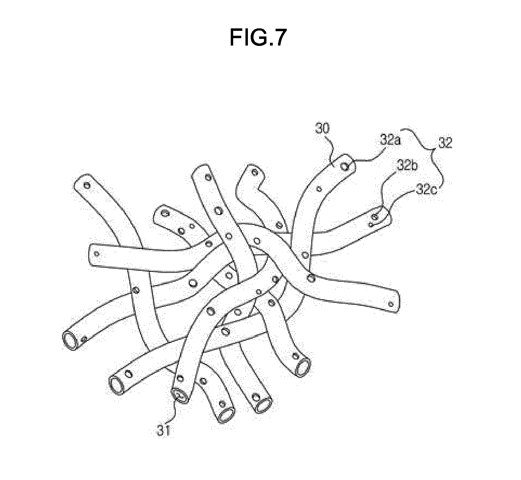

FIG. 7 is a perspective view showing a core material (glass wool) according to another embodiment of the present invention,

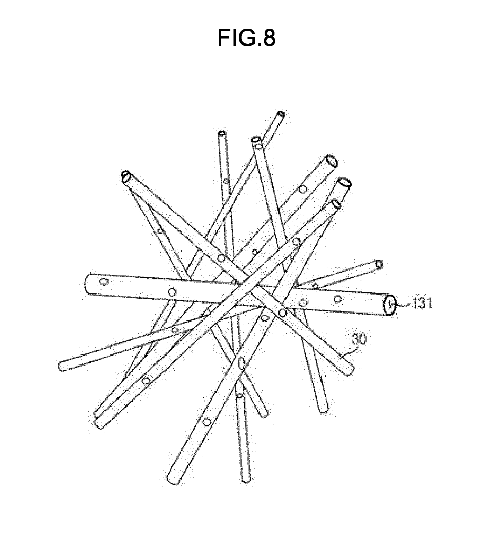

FIG. 8 is a perspective view showing a core material (glass fiber) according to another embodiment of the present invention, and

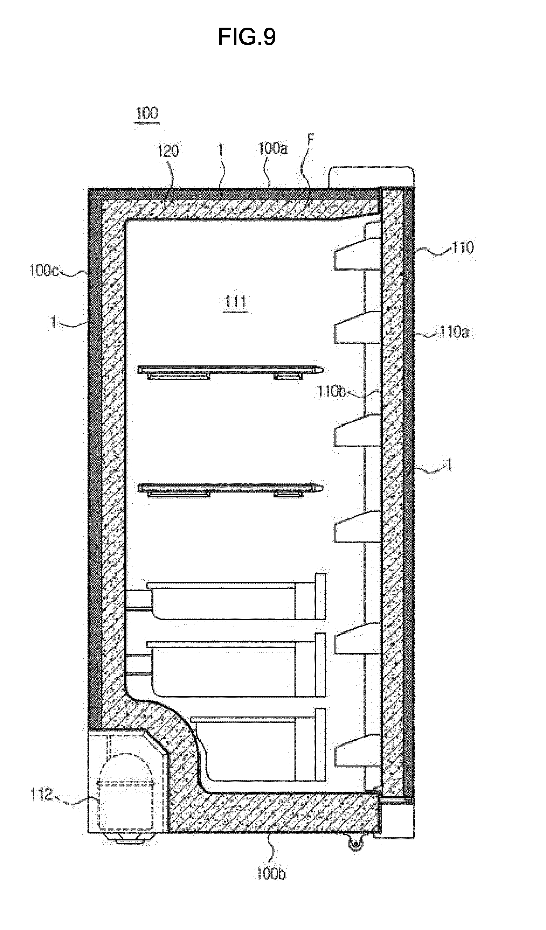

FIG. 9 is a view schematically showing a refrigerator having a vacuum insulation panel mounted therein according to an embodiment of the present invention.

As shown in FIG. 1, a vacuum insulation panel 1 includes a core material 10, an adsorbent 11, and a sheathing material 12.

The vacuum insulation panel 1 is prepared by inserting the core material 10 and the adsorbent 11 into the sheathing material 12 and decompressing the interior of the sheathing material 12.

The adsorbent 11 is used to maintain vacuum for a long period of time. The adsorbent 11 includes a gas adsorbent and/or a getter. Calcium oxide (CaO) to adsorb moisture is applied to the adsorbent 11.

The sheathing material 12 is a surface protection layer exhibiting high gas barrier properties. For example, the sheathing material 12 is formed of a laminate film including polyethylene terephthalate film, aluminum foil, and polyethylene film. In some aspects, the sheathing material is substantially impermeable to air.

The sheathing material 12 is sealed at three sides thereof so that the core material 10 and the adsorbent 11 can be inserted into the sheathing material 12. Consequently, the sheathing material 12 is formed approximately in the shape of a pouch.

As shown in FIGS. 2 to 4, the core material 10 is formed of a lump of fiber (hereinafter, glass fiber 20) including glass wool (FIG. 3) and/or glass fiber (FIG. 4).

The glass fiber 20 has a hollow part 21 formed therein. The hollow part 21 is formed (extends) in the longitudinal direction of the glass fiber 20. In some aspects, the glass fibers 20 are in the form of hollow tubes.

Hereinafter, a process of manufacturing a core material 10 using glass fiber 20 will be described with reference to FIGS. 5A to 6.

A lump of glass fiber 20, each piece of which has a hollow part 21 formed therein, is prepared so that some pieces of glass fiber 20 are entangled with one another or intersect one another.

In some aspects, the lump of glass fiber can be termed a slab of glass fibres or an entangled mass of glass fibres.

A lump of glass fiber 20 may be manufactured using at least one method selected from among: a hot pressing method, a needling method, and a wet method using water and binder in a mixed state.

When the hot pressing method is used, a lump of glass fiber 20 may be manufactured as follows. A lump of glass fiber 20 is pressed (P) in a state in which the lump of glass fiber 20 is heated to a temperature at which the glass fiber 20 is softened to such an extent that the sectional shape of the glass fiber 20 is not changed (that is, a temperature at which the glass fiber 20 begins to be slightly deformed by gravity or temperature at which the glass fiber 20 is deformed by a press that applies force to the glass fiber 20 up and down).

Subsequently, the lump of glass fiber 20, thermally deformed by the press, is cooled through a cooling process. As a result, the lump of glass fiber 20 loses elasticity before pressing, i.e. is plastically deformed, to form a core material 10 having a shape formed by the press, i.e. a board shape.

The core material 10 formed of the lump of glass fiber 20 is maintained in the board shape without additional binder between respective pieces of fiber.

Also, thermal conduction of the glass fiber 20 is minimized by the hollow part 21 formed in the glass fiber 20, thereby improving thermal conductivity.

In some examples, the glass fibers each have an outer diameter in the range of 1 to 10 µm, and/or the hollow part has an inner diameter of 3nm to 5 µm.

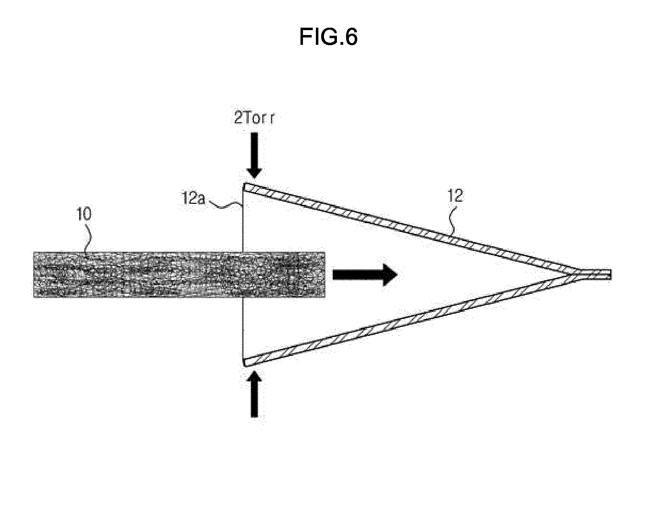

The core material 10 formed as described above is inserted into a pouch-shaped sheathing material 12, for example as shown in FIG. 6.

Subsequently, the interior of the sheathing material 12 is decompressed under vacuum in a decompression chamber so that the sheathing material 12 has an internal pressure of 1 x 10⁻¹ torr or less, and an opening 12a of the sheathing material 12 is hermetically sealed by thermal welding to form a high-performance vacuum insulation panel 1.

In this way, lower vacuum processing is performed at the pressure of 1 x 10⁻¹ torr or less than when a vacuum insulation panel is manufactured using conventional non-hollow glass fiber, thereby reducing manufacturing time and thus improving productivity.

As shown in FIG. 7, glass fiber 30 according to another embodiment of the present invention may have a hollow part 31 and pores 32 formed at the outer circumference thereof so as to communicate with the hollow part 31. In some examples, the pores 32 extend through the annular body of the glass fibres, to provide communication between the inner hollow part and an exterior of the glass fibres.

In some examples, a plurality of pores 32 of the glass fiber 30 may be irregularly formed. The pores can have various sizes 32a, 32b, and 32c, i.e. a range of different sizes.

In some examples, the glass fibers each have an outer diameter in the range of 1 to 10 µm, and/or the hollow part has an inner diameter of 3nm to 5 µm.

A method of manufacturing a core material 10 using the glass fiber 30 having the pores 32 and the hollow part 31 and a method of manufacturing a vacuum insulation panel 1 using the core material 10 are identical to the previously described method of manufacturing the core material 10 using the glass fiber 20 having the hollow part 21 and the previously described method of manufacturing the vacuum insulation panel 1 using the core material 10, and therefore, a detailed description thereof will be omitted.

Also, the surface of the glass fiber 20 is uneven by the pores 32 formed in the glass fiber 20, and the pores 32 of the glass fiber 30 minimize heat transfer through conduction of the glass fiber 30 along with the hollow part 31, thereby maximizing heat transfer efficiency.

Hereinafter, a refrigerator 100 having the vacuum insulation panel 1 according to the embodiment of the present invention mounted therein will be described with reference to FIG. 9.

The refrigerator 100 includes top and bottom walls 100a and 100b, side walls, and a rear wall 100c, which define a body of the refrigerator 100. An open front of the refrigerator 100 is opened and closed by a door 110.

A storage compartment 111 to store food is provided in the body defined by the top and bottom walls 100a and 100b, the side walls, and the rear wall 100c.

Although not shown, the storage compartment 110 is partitioned into a refrigerator compartment to store food in a refrigerated state, a freezer compartment to store food in a frozen state, a vegetable compartment to store vegetables, and an ice making compartment.

An evaporator (not shown) to generate cool air is installed at the rear wall 100c. A machinery compartment 112 is provided in the lower rear part of the body of the refrigerator 100. Electrical parts, such as a compressor, are installed in the machinery compartment 112.

An insulation unit 120 is provided between the top and bottom walls 100a and 100b and the storage compartment 110, between the side walls and the storage compartment 110, and between the rear wall 100c and the storage compartment 110.

A vacuum insulation panel 1 is disposed in the insulation unit 120. Specifically, one or more of the vacuum insulation panels 1 are disposed between the top and bottom walls 100a and 100b and the storage compartment 110, between the side walls and the storage compartment 110, and between the rear wall 100c and the storage compartment 110. Also, the vacuum insulation panel 1 is disposed between an outside panel 110a and an inside panel 110b of the door 110.

A foaming agent F, such as urethane, is filled in spaces defined around the top and bottom walls 100a and 100b, the side walls, the rear wall 100c, and the outside panel 110a of the door 110, at which the vacuum insulation panel 1 is disposed, to fix the vacuum insulation panel 1.

Consequently, the vacuum insulation panel 1, disposed in the insulation unit 120 of the refrigerator 100 while having a small volume, maximizes heat transfer insulation efficiency, thereby improving insulation performance of the refrigerator 100 based on higher insulation performance than the foaming agent F.

As is apparent from the above description, the hollow part formed in the core material, i.e. the glass fiber, minimizes heat transfer through the glass fiber, thereby maximizing heat transfer efficiency.

Also, the surface of the glass fiber is uneven by the pores formed at the outer circumference of the glass fiber. Consequently, contact between pieces of glass fiber is reduced to minimize heat transfer through the glass fiber, thereby maximizing heat transfer efficiency.

Also, since thermal conduction of the glass fiber is lower than the conventional glass fiber, a vacuum insulation panel having higher performance than a vacuum insulation panel manufactured using conventional non-hollow glass fiber is manufactured even through low vacuum decompression, thereby improving a manufacturing cycle.

Although a few embodiments of the present invention have been shown and described, it would be appreciated by those skilled in the art that changes may be made in these embodiments without departing from the principles of the invention, the scope of which is defined in the claims.

## Claims

1. A vacuum insulation panel comprising: a gas-interception sheathing material to cover a core material, an interior of the sheathing material being decompressed so that the sheathing material is hermetically sealed,
wherein the core material is formed of fiber having a hollow part formed therein.

2. The vacuum insulation panel according to claim 1 wherein the core material is formed of a lump of fiber.

3. The vacuum insulation panel according to claim 1 or 2, wherein the core material is formed of glass fiber and/or glass wool.

4. The vacuum insulation panel according to any one of the preceding claims, wherein the hollow part extends in a longitudinal direction of the fiber.

5. The vacuum insulation panel according to any one of the preceding claims, wherein the fiber has an outer diameter of 1 to 10 µm, and/or the hollow part has an inner diameter of 3 nm to 5 µm.

6. The vacuum insulation panel according to any one of the preceding claims, wherein the core material has a surface comprising a plurality of pores.

7. The vacuum insulation panel according to claim 6, wherein the pores have a range of different sizes.

8. The vacuum insulation panel according to claim 6 or 7, wherein the pores are arranged to connect to the hollow part.

9. A manufacturing method of a vacuum insulation panel comprising:
preparing a gas-interception sheathing material formed in a pouch shape;
forming glass fiber having a hollow part;
pressing the glass fiber while heating the glass fiber at a predetermined temperature to form a core material;
inserting the core material into the sheathing material;
decompressing an interior of the sheathing material; and
sealing the sheathing material.

10. The manufacturing method according to claim 9, wherein the glass fiber is pressed at a temperature at which a sectional shape of the glass fiber is not changed.

11. The manufacturing method according to claim 9 or 10, wherein a plurality of pieces of glass fiber are coupled to one another without an additional bonding agent.

12. The manufacturing method according to claim 9, 10 or 11, wherein the core material is manufactured using at least one selected from among a hot pressing method, a needling method, and a wet method using water and binder in a mixed state.

13. The manufacturing method according to any one of claims 9 to 12, wherein the hollow part extends in a longitudinal direction of the glass fiber.

14. The manufacturing method according to any one of claims 9 to 13, wherein the glass fiber is provided at an outer circumference thereof with a plurality of pores optionally having different sizes, and/or, the pores communicate with the hollow part.

15. A refrigerator comprising:
a body defined by top and bottom walls, side walls, and a rear wall, and
a storage compartment provided in the body, and
an insulation unit provided between the rear wall and the storage compartment for insulation,
wherein the insulation unit includes a vacuum insulation panel as claimed in any one of claims 1 to 8.
